# EUROPEAN PATENT APPLICATION

(11) **EP 2 565 231 A1**
(43) Date of publication of application: **06.03.2013**
(21) Application number: 11774875.6
(22) Date of filing: 19.04.2011
(51) Int. Cl.: C08L 23/26, C08K 5/092, C08L 25/04, C09K 3/16

(54) **SAPONIFIED POLYMER COMPOSITION, POLYMER-TYPE ANTISTATIC AGENT, THERMOPLASTIC STYRENE-BASED RESIN COMPOSITION, MOLDED PRODUCTS, AND PROCESS FOR PRODUCTION THEREOF**

(30) Priority: 30.04.2010 JP 2010105337
(71) Applicant: Du Pont-Mitsui Polychemicals Co., Ltd., Tokyo 105-7117 (JP)
(72) Inventor: DATE, Kenichi, Tokyo 105-7117 (JP); SHINYA, Yoichi, Ichihara-shi Chiba 299-0108 (JP); KIMURA, Tadashi, Ichihara-shi Chiba 299-0108 (JP)
(74) Representative: Gulde Hengelhaupt Ziebig & Schneider
(86) International application number: PCT/JP2011/059644
(87) International publication number: WO 2011/136092

(57) **Abstract**

Disclosed is a saponified polymer-containing composition containing a saponified polymer (A), which is obtained by alkaline saponification of an ethylene-unsaturated carboxylic acid random copolymer, and a dimer acid (B).

## Description

### TECHNICAL FIELD

The present invention relates to a saponified polymer-containing composition, a polymer-type antistatic agent, a thermoplastic styrene-based resin composition, a formed body and a production method thereof.

### BACKGROUND ART

As a variety of plastic articles are more widely used in electrical applications, there is a rapidly increasing demand for plastics having antistatic performance.
An example of plastic exhibiting such antistatic performance is an ionomer resin of a particular ethylene-unsaturated carboxylic acid copolymer.

An ionomer is obtained by partially neutralizing a copolymer of ethylene and an unsaturated carboxylic acid with a metal. As the metal, alkali metals, particularly those containing K, Rb or Cs ion are known to exhibit superior antistatic properties due to ionic conduction thereof. Further, even when such ionomer is not treated with a conventional antistatic agent known as an additive for resins, the resin itself exhibits electroconductivity. As a result, such ionomer is known to sustain an antistatic effect semipermanently.

Accordingly, there have been already proposed a number of antistatic materials utilizing an ionomer, formed bodies thereof and their improvements. For example, there is disclosed an antistatic material for polymers which is composed of an ionomer composition obtained by adding a polyhydric alcohol, such as glycerin or trimethylolpropane, to an ionomer of an ethylene-unsaturated carboxylic acid random copolymer whose ion source is an alkali metal such as potassium (see, for example, Patent Document 1).

In addition, there is disclosed an ionomer composition which is composed of a mixture containing a component obtained by adding a small amount of a polyhydric alcohol-based compound or an amino alcohol-based compound to a potassium ionomer of an ethylene-unsaturated carboxylic acid random copolymer having a neutralization degree of not less than 60% and an ethylene-(meth)acrylate-maleic monoester copolymer at a specific blending ratio, the ionomer composition being non-electrostatic, particularly not showing its humidity-dependency (see, for example, Patent Document 2).
There is also disclosed an injection-formed body of a resin composition containing a potassium ionomer of an ethylene-(meth)acrylic acid random copolymer and a styrene-based polymer (see, for example, Patent Document 3).

By the way, when the primary object is to attain antistatic properties, an ionomer having a rather high neutralization degree of its alkali metal is generally employed. That is, the higher the amount of alkali metal ions in an ionomer (alkali metal ion density), the more antistatic the ionomer is, so that such an ionomer is generally employed.

Meanwhile, a saponification product obtained by saponification of an ethylene-(meth) acrylate random copolymer has good transparency (shows a low haze value). It is known to form this saponification product by co-extruding with other polymer or to laminate the saponification product on a film of other polymer. As such other polymer, nylon, polyester, polyolefin, polystyrene and the like are disclosed. However, it has not been examined to blend a saponification product obtained by saponification of an ethylene-(meth) acrylate random copolymer to these other polymers (see, for example, Patent Document 4).

It is disclosed that a composition in which a saponification product obtained by saponification of an ethylene-(meth)acrylate random copolymer and an ionomer of an ethylene-(meth)acrylic acid random copolymer are mixed has excellent mechanical properties and cutting resistance. However, it has not been examined to blend the saponification product with a resin other than this ionomer (see, for example, Patent Document 5).

It is also known to adjust the elasticity, impact resistance and contraction rate by blending a composition, which is produced by saponification of an ethylene-(meth)acrylate random copolymer and shows a low haze value, with other polymer (see, for example, Patent Document 6).

Further, it is also known to improve the tensile strength, hot tack strength and seal strength by blending a saponification product, which is produced by saponification of an ethylene-(meth)acrylate random copolymer and shows a low haze value, with a polypropylene, a high-density polyethylene and an ethylene-alkyl acrylate copolymer (see, for example, Patent Document 7).

In cases where a saponification product of an ethylene-(meth)acrylate random copolymer is blended with other resin, an improvement in the fluidity thereof at the time of melting facilitates more uniform dispersion. Since the amount of alkali metal incorporated by alkaline saponification can be increased by increasing the amount of (meth) acrylate-originated structural units in the copolymer, the performance of modifying other resins is consequently improved. However, the amount of alkali metal groups increases substantially proportionally to the amount of (meth) acrylate-originated structural units at the same saponification degree. Accordingly, the fluidity of an ethylene-(meth) acrylate random copolymer at the time of melting is decreased and the dispersion with other resins is impaired. Consequently, the effect of modifying other resins by an increase in the amount of (meth) acrylate-originated structural units is offset, so that there is a problem that the performance of a saponification product of an ethylene-(meth) acrylate random copolymer cannot be sufficiently exhibited.

In order to improve the fluidity of a resin, a variety of lubricants are known; however, there are risks that the fluidity-improving effect is not exhibited as expected because the compatibility with a resin with which the lubricant is mixed is poor and that the lubricant bleeds out to the surface of the resulting formed body (bleed-out) to make it difficult to handle the formed body and/or impair its outer appearance.

### Prior Art Documents

### Patent Documents

[Patent Document 1] Japanese Patent Application Laid-Open (JP-A) No. H08-134295
[Patent Document 2] Japanese Patent Application Laid-Open (JP-A) No. 2002-12722
[Patent Document 3] Japanese Patent No. 3565892
[Patent Document 4] U.S. Patent No. 5569722
[Patent Document 5] Japanese Patent Publication (Kokai) No. H8-3004
[Patent Document 6] U.S. Patent No. 5569712
[Patent Document 7] U.S. Patent No. 5599877

### DISCLOSURE OF THE INVENTION

### PROBLEM TO BE SOLVED BY THE INVENTION

The present inventors discovered that a composition containing a saponification product obtained by alkaline saponification of an ethylene-unsaturated carboxylic acid ester copolymer and a dimer acid exhibits outstanding antistatic properties, has good fluidity at the time of melting and satisfies excellent modifying effect even when blended with other resin, thereby completing the present invention based on this finding.

That is, there is a demand for a saponified polymer-containing composition which exhibits excellent antistatic properties in a low-humidity atmosphere and with time and has good fluidity of a saponified polymer obtained by alkaline saponification of a random copolymer of ethylene and an unsaturated carboxylic acid ester, in which the composition the transparency and basic properties of the saponified polymer are not impaired; a polymer-type antistatic agent containing the saponified polymer-containing composition; and a thermoplastic styrene-based resin composition. Further, there is also a demand for a formed body having a small amount of bleed-out and a method of producing a formed body in which fuming and contamination during form processing are inhibited.

### MEANS FOR SOLVING THE PROBLEMS

<1> A saponified polymer-containing composition containing a saponified polymer (A), which is obtained by alkaline saponification of a random copolymer of ethylene and an unsaturated carboxylic acid ester, and a dimer acid (B).

<2> The saponified polymer-containing composition according to <1>, wherein the content of the above-described dimer acid (B) is 1% by mass to 30% by mass based on a total mass of the above-described saponified polymer (A) and the above-described dimer acid (B).

<3> The saponified polymer-containing composition according to <1> or <2>, wherein the above-described alkaline saponification is potassium saponification.

<4> The saponified polymer-containing composition according to any one of <1> to <3>, wherein the above-described unsaturated carboxylic acid ester is a C₁ to C₈ alkyl ester of an unsaturated carboxylic acid.

<5> The saponified polymer-containing composition according to <4>, wherein the above-described unsaturated carboxylic acid is at least either of acrylic acid and methacrylic acid.

<6> The saponified polymer-containing composition according to any one of <1> to <5>, which further contains a polyhydric alcohol or an alkylene oxide adduct of a polyhydric alcohol.

<7> A polymer-type antistatic agent composed of the saponified polymer-containing composition according to any one of <1> to <6>.

<8> A thermoplastic styrene-based resin composition, which contains the saponified polymer-containing composition according to any one of <1> to <6> in an amount ranging from not less than 2% by mass to less than 100% by mass and a styrene-based resin in an amount ranging from more than 0% by mass to less than 98% by mass (wherein the total amount of the above-described saponified polymer-containing composition and the above-described styrene-based resin is defined as 100% by mass).

<9> A formed body containing the thermoplastic styrene-based resin composition according to <8>.

<10> A method of producing a formed body, in which the thermoplastic styrene-based resin composition according to <8> is melt-formed.

### EFFECTS OF THE INVENTION

According to the present invention, a saponified polymer-containing composition which exhibits excellent antistatic properties in a low-humidity atmosphere and with time and has good fluidity of a saponified polymer obtained by alkaline saponification of a random copolymer of ethylene and an unsaturated carboxylic acid ester, in which the composition the transparency and basic properties of the saponified polymer are not impaired; a polymer-type antistatic agent containing the saponified polymer-containing composition; and a thermoplastic styrene-based resin composition can be provided. Further, a formed body having a small amount of bleed-out and a method of producing a formed body in which fuming and contamination during form processing are inhibited can also be provided.

### BEST MODE FOR CARRYING OUT THE INVENTION

### <Saponified polymer-containing composition>

The saponified polymer-containing composition according to the present invention contains a saponified polymer (A), which is obtained by alkaline saponification of a random copolymer of ethylene and an unsaturated carboxylic acid ester (ethylene-unsaturated carboxylic acid ester random copolymer), and a dimer acid (B). It is preferred that the saponified polymer-containing composition according to the present invention further contain a polyhydric alcohol (D) or an alkylene oxide adduct of a polyhydric alcohol (C). The saponified polymer-containing composition according to the present invention may also contain other component(s) as required.

The saponified polymer-containing composition according to the present invention exhibits excellent antistatic properties. The saponified polymer-containing composition contains a saponified polymer (A), which is obtained by alkaline saponification of an ethylene-unsaturated carboxylic acid ester random copolymer that sustains antistatic effect, and a dimer acid (B), whereby a saponified polymer-containing thermoplastic polymer composition in which the fluidity at the time of melting and the compatibility with other polymers are improved as compared to the case where the saponified polymer (A) is used alone and in which the saponified polymer (A) is uniformly dispersed can be obtained.
The uniform dispersion of the saponified polymer (A) is also stable with time, so that the saponified polymer-containing composition according to the present invention can exhibit good initial antistatic performance in a low-humidity atmosphere and express antistatic performance with time.
Further, by the uniform dispersion of the saponified polymer (A), a preferable fluidity-improving effect is also attained when the saponified polymer-containing composition is blended with other thermoplastic resin.
In this manner, in a formed body produced from such saponified polymer-containing composition, the saponified polymer (A) is dispersed uniformly and has excellent fluidity. Thus, at the time of processing the formed body, the constituents of the saponified polymer-containing composition is hardly vaporized and degraded and is not likely to cause bleed-out. The term "bleed-out" used herein refers to appearance of chalking and stickiness on the surface of a formed body caused by a constituent thereof. Therefore, contamination of a forming die can be prevented during forming. Consequently, the frequency of die cleaning can be reduced, so that the productivity of formed bodies can also be improved.
Further, since the saponified polymer-containing composition according to the present invention can exhibit the above-described antistatic properties without impairing the basic properties of the saponified polymer (A), such as transparency and mechanical strength, it may be used in a variety of applications.
Here, examples of formed bodies that are obtained using the saponified polymer-containing composition include formed bodies composed of the saponified polymer-containing composition and formed bodies composed of a resin composition produced from the saponified polymer-containing composition and other hydrophobic polymer. Examples of the above-described other hydrophobic polymer constituting the resin composition include alkylene oxide adducts of polyhydric alcohols.

Embodiments of the saponified polymer-containing composition according to the present invention will now be concretely described in more detail. However, the present invention is not restricted to these embodiments by any means.

### [Saponified polymer (A)]

The material resin used in the saponified polymer (A) of the present invention, an ethylene-unsaturated carboxylic acid ester random copolymer, is a polymer obtained by random copolymerization of ethylene and at least one unsaturated carboxylic acid ester.
Specific examples thereof include binary random copolymers composed of ethylene and an unsaturated carboxylic acid alkyl ester.

Examples of the unsaturated carboxylic acid include acrylic acid, methacrylic acid, ethacrylic acid, crotonic acid, fumaric acid, maleic acid, maleic anhydride, itaconic acid and itaconic anhydride.
Examples of the alkyl moiety of the alkyl ester include those having 1 to 12 carbon atoms and more specific examples include alkyl groups such as methyl, ethyl, n-propyl, isopropyl, n-butyl, isobutyl, sec-butyl, 2-ethylhexyl and isooctyl.
In the present invention, it is preferred that the alkyl moiety of the alkyl ester have 1 to 8 carbon atoms.

Examples of the unsaturated carboxylic acid alkyl ester include alkyl acrylates, alkyl methacrylates, alkyl crotonates and alkyl maleates.
The unsaturated carboxylic acid may also have two or more carboxyl groups in one molecule. Such unsaturated carboxylic acid having two or more carboxyl groups in one molecule may be any unsaturated carboxylic acid as long as at least one of the plural carboxyl groups is an alkyl ester. For example, the alkyl maleate may be monoalkyl maleate or dialkyl maleate.
In cases where the unsaturated carboxylic acid has plural carboxyl groups (acid groups) in one molecule and all of the carboxyl groups are alkyl-esterified, when the saponification degree is not 100%, there exists an ester group with absence of acid group. Therefore, there is an effect of improving the compatibility between the saponified polymer (A) and a variety of thermoplastic resins such as styrene-based resins.
Since this fulfills the object of the present invention, in cases where an unsaturated carboxylic acid having two or more carboxyl groups in one molecule is used in the present invention, it is preferred that all of the carboxyl groups be alkyl-esterified.

Such unsaturated carboxylic acid alkyl ester may be used individually, or two or more thereof may be used in combination.
That is, when one compound is used as an unsaturated carboxylic acid alkyl ester component, a binary random copolymer of ethylene and one unsaturated carboxylic acid alkyl ester is obtained. When ethylene and two unsaturated carboxylic acid alkyl esters are copolymerized, a tertiary random copolymer is obtained. Still, in both of these cases, the resulting random copolymer is composed of two components, which are ethylene and unsaturated carboxylic acid alkyl ester.
Among the above-described ones, the unsaturated carboxylic acid is preferably at least either of acrylic acid and methacrylic acid.

As the unsaturated carboxylic acid ester, methyl ester, ethyl ester, n-butyl ester and isobutyl ester of acrylic acid or methacrylic acid are particularly preferred.

In the present invention, as the ethylene-unsaturated carboxylic acid ester random copolymer, random copolymers composed of two components of ethylene and a (meth) acrylate are particularly preferred. Thereamong, binary random copolymers containing only one compound as the (meth) acrylate are preferred. Examples of such binary random copolymers include ethylene-methyl acrylate random copolymers, ethylene-ethyl acrylate random copolymers, ethylene-n-butyl acrylate random copolymers, ethylene-isobutyl acrylate random copolymers, ethylene-methyl methacrylate random copolymers, ethylene-ethyl methacrylate random copolymers, ethylene-n-butyl methacrylate random copolymers and ethylene-isobutyl methacrylate random copolymers.

As for the content of unsaturated carboxylic acid ester-originated structural unit in the ethylene-unsaturated carboxylic acid ester random copolymer prior to the above-described saponification, an unsaturated carboxylic acid ester-originated structural unit is easily introduced industrially in a larger amount as compared to an unsaturated carboxylic acid-originated structural unit. The above-described content is 5% by mass to 50% by mass, particularly preferably 20% by mass to 35% by mass. That is, when the content of the unsaturated carboxylic acid ester-originated structural unit is in this range, an excellent balance between the antistatic properties and the miscibility with the dimer acid (B) as well as excellent uniform dispersibility are attained, which is preferred.
In addition, it is preferred that the melt flow rate at 190°C and 2,160-g load (in accordance with JIS K7210-1999) of the ethylene-unsaturated carboxylic acid ester random copolymer prior to the above-described saponification be in the range of 1 g/10 min to 1,300 g/10 min. It is noted here that "melt flow rate" may also be hereinafter abbreviated as "MFR".
Further, two or more of the ethylene-unsaturated carboxylic acid ester random copolymers before the above-described saponification may also be mixed and used in combination.

Such ethylene-unsaturated carboxylic acid ester random copolymer is produced by, for example, high-pressure radical copolymerization which is itself known.

In the present invention, the above-described random copolymer of ethylene and an unsaturated carboxylic acid ester is subjected to alkaline saponification. Examples of metal ion species of caustic alkali used in the saponification include lithium (Li), sodium (Na), potassium (K), rubidium (Rb) and cesium (Cs).
Among these ion species, from the standpoint of the antistatic properties, sodium, potassium, rubidium and cesium are preferred, and also adding the material availability into consideration, potassium is particularly preferred.

In the saponified polymer (A) of the present invention, the concentration of alkali metal ion present in the resulting saponification product as an alkali carboxylate, such as potassium or sodium, is preferably 0.1 mol/kg to 5.8 mol/kg, more preferably 1 mol/kg to 3 mol/kg. When the concentration of alkali metal ion is not lower than 0.1 mol/kg, a specific surface resistivity required for antistatic properties, which is not higher than 10¹⁰ Ω/square, particularly not higher than 10⁸ Ω/square, is likely to be attained, and when the concentration of alkali metal ion is not higher than 5.8 mol/kg, an increase in the melt viscosity can be prevented, so that excellent formability and processability are attained.

From the standpoints of the formability and the processability, the saponified polymer of the present invention has a melt flow rate at 230°C and 10-kg load (in accordance with JIS K7210-1999) of 0.01 g/10 min to 100 g/10 min, particularly suitably 0.1 g/10 min to 50 g/10 min.

In the present invention, the saponified polymer (A) is preferably one in which the molar ratio of the amount of alkali metal ion present as an alkali carboxylate after the saponification is in the range of 0.1 to 0.6 with respect to the molar amount of the total unsaturated carboxylic acid ester group units in the ethylene-unsaturated carboxylic acid ester copolymer to be subjected to alkaline saponification. That is, from the standpoints of the antistatic properties and the miscibility with the dimer acid (B), it is preferred that the saponified polymer have a saponification degree in the range of 10 to 60%.
Incidentally, in the present invention, since the ester component in the copolymer is partially altered to an alkali salt component by a saponification reaction with an alkali, the resulting saponification product is a copolymer which contains an ethylene unit, an unsaturated carboxylic acid ester unit and an unsaturated carboxylic acid alkali salt unit, but no free carboxyl group unit.

The alkaline saponification of the ethylene-unsaturated carboxylic acid ester random copolymer may be performed with a caustic alkali or the like by a method which is itself known. For example, the ethylene-unsaturated carboxylic acid ester random copolymer may be melt-mixed with a prescribed amount of a caustic alkali such as potassium hydroxide in a kneading machine such as an extruder, kneader or Banbury mixer at a temperature of, for example, 100°C to 250°C. Alternatively, a method in which the ethylene-unsaturated carboxylic acid ester random copolymer is melt-homogenized using the above-described kneading machine and then a prescribed amount of a caustic alkali such as potassium hydroxide is added thereto to allow the ester moiety of the ethylene-unsaturated carboxylic acid ester copolymer to react with the caustic alkali so as to obtain a saponification product may also be employed.

The content of the saponified polymer (A) is preferably 99% by mass to 50% by mass with respect to the total solid mass of the saponified polymer-containing composition according to the present invention.
By controlling the total amount of the saponified polymer (A) at not less than 50% by mass, even when it is blended to the later-described hydrophobic polymer (C), the saponified polymer (A) can impart the hydrophobic polymer with antistatic properties that withstand practical use. Further, by controlling the total amount of the saponified polymer (A) at not higher than 99% by mass, not only the melt-flowability as a saponified polymer-containing composition can be ensured, but also uniform mixing with the later-described hydrophobic polymer can be attained without impairing the melt-flowability. The content of the saponified polymer (A) is 98% by mass to 70% by mass, particularly preferably 97% by mass to 85% by mass, with respect to the total solid mass of the saponified polymer-containing composition according to the present invention.

### [Dimer acid (B)]

The saponified polymer-containing composition according to the present invention contains at least one dimer acid (B). The dimer acid (B) is a polycarboxylic acid obtained by a polymerization reaction of two or more molecules of unsaturated fatty acid. The dimer acid (B) is usually obtained as two or more mixtures containing a monomer (one molecule) of unsaturated fatty acid and used as a mixture in a variety of applications.
Further, the dimer acid (B) can be obtained by dimerization of a C₈ to C₂₂ linear or branched unsaturated fatty acid and also includes derivatives thereof. Examples of the derivatives of such dimer acid include hydrogenation products. Specifically, for example, a hydrogenated dimer acid obtained by hydrogenating the above-described dimer acid to reduce unsaturated bond contained therein can be employed.
By containing such a dimer acid along with the saponified polymer (A), the saponified polymer (A) has an improved fluidity.

The dimer acid may also be one obtained by using as a starting material, for example, 3-octanoic acid, 10-undecenoic acid, oleic acid, linoleic acid, elaidic acid, palmitoleic acid, linolenic acid, a mixture of two or more of these acids or an industrially available mixture of these unsaturated carboxylic acids such as tall oil fatty acid, soybean oil fatty acid, palm oil fatty acid, rice bran oil fatty acid or linseed oil fatty acid. These dimer acids may also contain a monomer acid and/or a trimer acid in a small amount.

Conventionally, the dimer acid (B) can normally be produced by dimerization of an unsaturated fatty acid such as tall oil fatty acid at a high temperature using a montmorillonite-type clay as a catalyst.

Examples of the dimer acid (B) include the chain dimer acid represented by the following Formula (1).

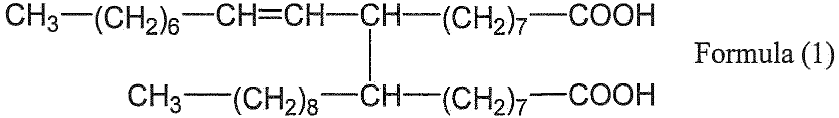

In addition to the above-described chain dimer acid represented by the Formula (1); for example, a mixture containing cyclic dimer acid represented by the following Formula (2) or (3) can be obtained.

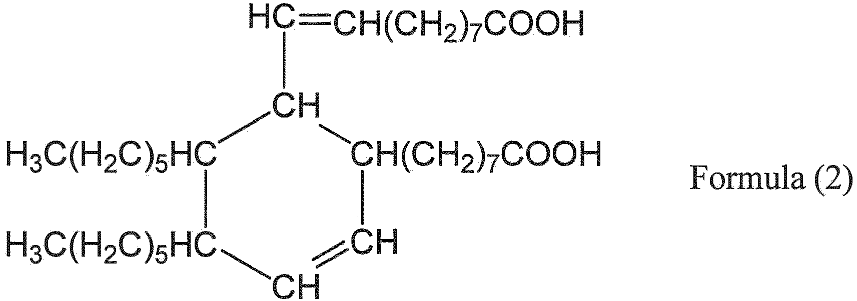

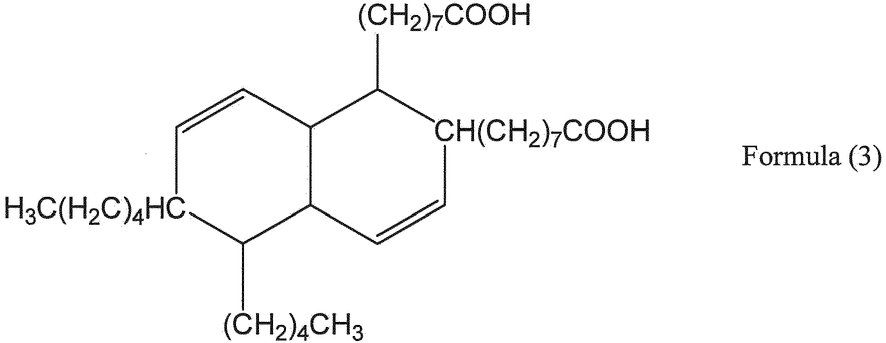

Examples of industrially available dimer acid (B) include HARIDIMER 200 and 300 (manufactured by Harima Chemicals, Inc.); TSUNODIME 205 and 395 (manufactured by Tsuno Food Industrial Co., Ltd.); and EMPOL 1026, 1028, 1061 and 1062 (manufactured by Cognis Corporation) and examples of hydrogenated dimer acid include EMPOL 1008 and 1012 (manufactured by Cognis Corporation).

In the saponified polymer-containing composition according to the present invention, the content of the dimer acid (B) is preferably 1% by mass to 50% by mass with respect to the total mass of the saponified polymer (A) and the dimer acid (B).
By controlling the content of the dimer acid (B) at not less than 1% by mass with respect to the total mass of the saponified polymer (A) and the dimer acid (B), the uniform dispersibility of the saponified polymer (A) in the saponified polymer-containing composition according to the present invention can be improved and good melt-flowability as a compound can be imparted. By controlling the content of the dimer acid (B) at not higher than 50% by mass with respect to the total mass of the saponified polymer (A) and the dimer acid (B), the melt-flowability of the saponified polymer (A) can be attained in a range suitable for form processing. The content of the dimer acid (B) is preferably 2% by mass to 30% by mass, particularly preferably 3% by mass to 15% by mass, with respect to the total mass of the saponified polymer (A) and the dimer acid (B).

As described in the above, the saponified polymer-containing composition according to the present invention contains the saponified polymer (A) and the dimer acid (B). In cases where the components (A) and (B) are melt-mixed at the time of producing the composition, the alkali metal in the component (A) may undergo a reaction with a part or all of the carboxyl groups in the component (B), yielding a structure of an alkali metal salt of the dimer acid. Therefore, the above-described dimer acid (B) can encompass an embodiment in which it is blended with the saponified polymer in the form of an alkali metal salt thereof and an embodiment in which it is blended in the form of a mixture of the dimer acid and an alkali metal salt thereof.
Further, the saponified polymer-containing composition according to the present invention may also contain not only an alkali metal salt of a dimer acid obtained by a reaction of the alkali metal in the component (A) with a part or all of the carboxyl groups in the component (B), but also separately other alkali metal salt of dimer acid and/or a metal salt of dimer acid other than alkali metal. A metal salt of dimer acid which does not go though the above-described reaction can be produced by bringing into contact and superheating the above-described commercially available dimer acid and a metal compound. Examples of metal constituting the metal compound include alkali metals such as sodium, potassium, lithium, rubidium and cesium; alkaline earth metals such as magnesium; and zinc. As the metal compound, oxides, carbonates, hydroxides and the like of these exemplified metals can be employed. By allowing a dimer acid and a metal compound to undergo contact reaction, a part or all of the carboxyl groups of the dimer acid form a metal salt. Examples of alkali metal salt of dimer acid include lithium salts of dimer acids (including partial salts), sodium salts of dimer acids (including partial salts), potassium salts of dimer acids (including partial salts), rubidium salts of dimer acids (including partial salts) and cesium salts of dimer acids (including partial salts).

### [Alkylene oxide adduct of a polyhydric alcohol (C)]

It is preferred that the saponified polymer-containing composition according to the present invention further contain an alkylene oxide adduct of a polyhydric alcohol (C).
Examples of the alkylene oxide adduct of a polyhydric alcohol (C) include polyethylene glycol, polypropylene glycol, polybutylene glycol and polyoxyethylene-polyoxypropylene glycol.
These alkylene oxide adducts of polyhydric alcohol can be expected to exhibit an effect of improving the humidity dependency of antistatic performance, for example, an antistatic effect at a standard room temperature of 23°C over humidity conditions ranging from a low-humidity of not higher than 30% RH, where the air is dry and static electricity is thus likely to be generated, to a high-humidity condition of not lower than 50% RH. In addition, a further improvement in the melt-flowability can also be expected.
Thereamong, as the alkylene oxide adduct of a polyhydric alcohol (C), from the standpoint of the balance between the above-described performance-improving effect and the ease of handling at the time of resin processing such as film formation, polyethylene glycol and polypropylene glycol are preferred and polypropylene glycol is particularly preferred.

As described in the above, the alkylene oxide adduct of a polyhydric alcohol (C) can be expected to have an effect of further improving the humidity dependency of antistatic performance as well as the melt-flowability. However, since the alkylene oxide adduct of a polyhydric alcohol (C) is a component having a low molecular weight as compared to the polymer component, addition thereof in a large amount also poses a risk of causing bleed-out to contaminate the surface of the resulting formed body and/or the molding die. Therefore, the content of the alkylene oxide adduct of a polyhydric alcohol (C) is preferably 3% by mass to 30% by mass, more preferably 5% by mass to 20% by mass, with respect to the total solid mass of the saponified polymer-containing composition according to the present invention.

### [Polyhydric alcohol (D)]

It is preferred that the saponified polymer-containing composition according to the present invention further contain a polyhydric alcohol (D).
Examples of the polyhydric alcohol (D) include polyhydric alcohols having two or more hydroxyl groups in one molecule, such as glycerol, diglycerol, trimethyl propane, ethylene glycol, polyethylene glycol, propylene glycol, dipropylene glycol and sorbitol; and partial esterification products thereof. Thereamong, as the polyhydric alcohol (D), from the standpoint of the balance among the ease of handling, performance, availability and cost, glycerol and diglycerol are preferred.

In cases where the alkali metal of the saponified polymer-containing composition according to the present invention is potassium, from the standpoint of allowing antistatic properties and high-frequency weldability to be exhibited over a wide humidity range, the content of the polyhydric alcohol (D) is preferably 3% by mass to 30% by mass, more preferably 5% by mass to 20% by mass, with respect to the total solid mass of the saponified polymer-containing composition according to the present invention.

The saponified polymer-containing composition according to the present invention is preferably applied as an antistatic agent. An antistatic agent composed of the saponified polymer-containing composition according to the present invention is of a polymer-type; therefore, when it is added to a variety of thermoplastic resins, there is no reduction in the amount of the components due to bleed-out and the resulting resins maintain a low surface resistivity and antistatic performance over a prolonged period of time.
In addition, since no low-molecular-weight component is contained therein, a high temperature during form processing does not cause vaporization and fuming.

### [Styrene-based resin (E)]

A "styrene-based resin" is a homopolymer or copolymer of styrene and representative examples thereof include ABS-based resins and polystyrenes. In the present invention, from the standpoint of the effect, the styrene-based resin (E) is preferably a styrene-based copolymer obtained by copolymerization of at least acrylonitrile and styrene.
Here, "ABS-based resin" is a general term for rubber-reinforced styrene-based polymers that are synthesized by a variety of production methods such as blending method, grafting method and graft-blending method and representative examples thereof include those rubber-reinforced styrene-based polymers obtained by graft-polymerizing a rubber component such as polybutadiene, styrene-butadiene rubber or ethylene-propylene-diene rubber with styrene and other monomer such as acrylonitrile, methyl methacrylate, α-methylstyrene, ethylenebismaleimide or maleimide.

Further, "polystyrene" is a general term encompassing, for example, those general-purpose polystyrenes that are synthesized by a production method such as suspension polymerization method or continuous polymerization method and those impact-resistant polystyrenes that are obtained by graft polymerization of styrene and a rubber component such as butadiene rubber. Among these styrene-based resins, diene rubber-reinforced ABS-based resins are preferred and styrene-based resins containing a styrene-originated unit and an acrylonitrile-originated unit are particularly preferred.

Examples of the method for obtaining the above-described styrene-based resin-containing composition include a method in which a pre-prepared saponified polymer and a styrene-based resin are melt-mixed with heating using an uniaxial extruder, biaxial extruder, Banbury mixer, kneader or the like.

When the saponified polymer-containing composition according to the present invention contains the styrene-based resin (E), the saponified polymer-containing composition can be used as a polymer-type antistatic agent to utilize its excellent antistatic properties. In cases where the saponified polymer-containing composition is utilized as a polymer-type antistatic agent, it is preferred that the styrene-based resin (E) be added such that the concentration of alkali metal ion in the final resin composition in which the saponified polymer-containing composition according to the present invention is added as a polymer-type antistatic agent becomes 0.002 mol/kg to 5.8 mol/kg.
Alternatively, taking the total amount of the saponified polymer-containing composition and the styrene-based resin as 100% by weight, it is preferred that the saponified polymer-containing composition be contained at a ratio of not lower than 0.1% by mass, preferably not lower than 2% by mass to lower than 100% by mass, and the styrene-based resin be contained at a ratio of higher than 0% by mass to lower than 99.9% by mass, preferably lower than 98% by mass. Further, in terms of an object of imparting antistatic performance without impairing the mechanical performance intrinsic to a styrene-based resin, the object can also be sufficiently achieved with the upper limit of the blending ratio of the saponified polymer-containing composition being not higher than 30% by mass, preferably not higher than 15% by mass, more preferably not higher than 10% by mass.

### [Various additives]

The saponified polymer-containing composition according to the present invention may further contain, for example, an ultraviolet absorber, a light stabilizer, an antioxidant, an anti-aging agent, a heat stabilizer, a lubricant, an antiblocking agent, a plasticizer, an adhesive, an inorganic filler, a reinforcement fiber such as glass fiber or carbon fiber, a pigment, a dye, a flame retardant, a flame-retardant aid, a foaming agent and/or a foaming aid. Further, other antistatic agent known as an additive for resins may also blended.

Examples of the above-described ultraviolet absorber include benzophenone-based ultraviolet absorbers such as 2-hydroxy-4-methoxybenzophenone, 2,2'-dihydroxy-4-methoxybenzophenone, 2-hydroxy-4-methoxy-2-carboxybenzophenone and 2-hydroxy-4-n-octoxybenzophenone; benzotriazole-based ultraviolet absorbers such as 2-(2'-hydroxy-3',5'-di-t-butylphenyl)benzotriazole, 2-(2'-hydroxy-5-methylphenyl)benzotriazole and 2-(2'₋hydroxy-5-t-octylphenyl)benzotriazole; and salicylate-based ultraviolet absorbers such as phenyl salicylate and p-octylphenyl salicylate.
Examples of the above-described light stabilizer include those of hindered amine-based.
Examples of the above-described antioxidant include a variety of hindered phenol-based antioxidants and phosphite-based antioxidants.

### <Polymer-type antistatic agent and thermoplastic styrene-based resin composition>

The polymer-type antistatic agent according to the present invention is composed of the saponified polymer-containing composition according to the present invention.
As described in the above, the saponified polymer-containing composition according to the present invention is preferably applied as an antistatic agent. The polymer-type antistatic agent according to the present invention is an antistatic agent composed of the saponified polymer-containing composition according to the present invention and when it is added to a variety of thermoplastic resins, there is no reduction in the amount of the components due to bleed-out and the resulting resins maintain a low surface resistivity and antistatic performance over a prolonged period of time.
In addition, since no low-molecular-weight component is contained therein, a high temperature during form processing does not cause vaporization and fuming.

The thermoplastic styrene-based resin composition according to the present invention contains the saponified polymer-containing composition according to the present invention and a styrene-based resin. In the total mass of the thermoplastic styrene-based resin composition, the content of the saponified polymer-containing composition according to the present invention is in the range of higher than 2% by mass to lower than 100% by mass and the content of the styrene-based resin is in the range of higher than 0% by mass to not higher than 98% by mass.
Since the thermoplastic styrene-based resin composition according to the present invention contains the above-described saponified polymer-containing composition according to the present invention, it has excellent antistatic properties.

### <Formed body and production method thereof>

The formed body according to the present invention is constituted by using the thermoplastic styrene-based resin composition according to the present invention containing the above-described saponified polymer-containing composition according to the present invention and is not restricted except that it is formed using the thermoplastic styrene-based resin composition according to the present invention. In the present invention, the formed body is preferably an extrusion-formed product, a press-formed product or an injection-molded product.

The method of producing a formed body according to the present invention is constituted in such a manner that the above-described thermoplastic styrene-based resin composition according to the present invention is supplied and formed under pressure. For example, a formed body can be prepared by supplying the thermoplastic styrene-based resin composition and making it into a film, followed by pressing of the thus obtained film.
The method of supplying the thermoplastic styrene-based resin composition at the time of film formation is not restricted as long as it is capable of melting and supplying the thermoplastic styrene-based resin composition, and examples thereof include injection molding method and melt extrusion forming method. Further, examples of a method of forming under pressure include those methods by which the resulting film is heat-pressed by, for example, pressing the film into a desired die or the like or pressing a hot plate on the resulting film.

As described in the above, the thermoplastic styrene-based resin composition according to the present invention has excellent antistatic properties. Therefore, the formed body of the present invention containing the thermoplastic styrene-based resin composition according to the present invention can be widely used in, specifically, building materials such as ceiling materials and flooring materials; civil engineering materials; automobile parts; office automation equipments; parts of home electric appliances; storage cases of these materials, parts and the like; stationeries; and daily necessities.

### EXAMPLES

The present invention will now be described in more detail by way of examples thereof. However, the present invention is not restricted to the following examples.
The materials used in the following Examples and Comparative Examples, synthesized saponified polymers and evaluation methods of the resulting polymer compositions are as follows.

### 1. Materials

### <Ethylene-unsaturated carboxylic acid ester random copolymer>

■ Ethylene-ethyl acrylate random copolymer (EEA-1)
   Ethyl acrylate (EA) content; 34% by mass
   MFR; 25 g/10 min (190°C, 2,160-g load, in accordance with JIS K7210-1999)
■ Ethylene-ethyl acrylate random copolymer (EEA-2)
   Ethyl acrylate (EA) content; 26% by mass
   MFR; 240 g/10 min (190°C, 2,160-g load, in accordance with JIS K7210-1999)

### <Dimer acid (B)>

■ Dimer acid (B1): TSUNODIME 395 [manufactured by Tsuno Food Industrial Co., Ltd.]
   Component composition:
   dimer acid; 76.2% by mass, monomer acid; 10% by mass, trimer acid; 13.8% by mass
■ Dimer acid (B2): TSUNODIME 205 [manufactured by Tsuno Food Industrial Co., Ltd.]
   Component composition:
   dimer acid; 94% by mass, monomer acid; 3% by mass, trimer acid; 3% by mass
■ Hydrogenated Dimer acid (B3): Dimer acid hydrogenated [manufactured by ALDRICH]
   Component composition before hydrogenation: dimer acid; not less than 99% by mass

### <Alkylene oxide adduct of a polyhydric alcohol (C)>

### ■ Polypropylene glycol (PPG) (C1)

[manufactured by ADEKA Corporation; ADEKA POLYETHER P700, Mw = 700]

### <Polyhydric alcohol (D)>

### ■ Diglycerol (D1)

[manufactured by Sakamoto Yakuhin Kogyo Co., Ltd.; DIGLYCERIN S]

### <Styrene-based resin (E)>

### ■ Acrylonitrile-butadiene-styrene copolymer (ABS) (E1)

manufactured by Techno Polymer Co., Ltd., trade name: TECHNO ABS 330
MFR: 42 g/10 min (220°C, 98-N load, in accordance with ISO1131)
Density: 1.05 g/cm³ [physical property values are based on the product catalogue]

### ■ Acrylonitrile-butadiene-styrene copolymer (ABS) (E2)

manufactured by Techno Polymer Co., Ltd., trade name: TECHNO ABS 130
MFR: 18 g/10 min (220°C, 98-N load, in accordance with ISO1131)
Density: 1.05 g/cm³ [physical property values are based on the product catalogue]

### ■ Acrylonitrile-butadiene-styrene copolymer (ABS) (E3)

manufactured by Techno Polymer Co., Ltd., trade name: TECHNO ABS 520
MFR: 8 g/10 min (220°C, 98-N load, in accordance with ISO1131)
Density: 1.05 g/cm³ [physical property values are based on the product catalogue]

### <Production of saponified polymer (A)>

### -Production of saponified polymer (A1)-

To a kneader, 10 kg of an ethylene-methyl acrylate random copolymer (EEA-1) was fed as a material resin for preparation of a saponification product (base resin) along with 1.14 kg of potassium hydroxide (KOH). The EEA and potassium hydroxide (KOH) were melted, allowed to react and then extruded to obtain a saponified polymer (A1). In the thus obtained saponified polymer (A1), the concentration of potassium ion present in the form of potassium acrylate (amount of K ion) was 2.04 mol/kg, and the ratio of the molar amount of the alkali metal ion present in the saponification product was 60% with respect to the molar amount of the total acrylate group unit in the ethylene-methyl acrylate random copolymer (EEA-1) prior to the above-described saponification (percentage: hereinafter, this ratio is referred to as "saponification rate").

### -Production of saponified polymer (A2)-

A saponified polymer (A2) was synthesized in the same manner as in the case of the saponified polymer (A1), except that the unsaturated carboxylic acid ester copolymer was changed as shown in Table 1 below and that the amount of potassium hydroxide was changed in accordance with the ethylene-unsaturated carboxylic acid ester random copolymer and the desired saponification rate.

### (Measurement of alkali metal ion concentration)

The amount of alkali metal ion in the respective saponified polymers (A1) and (A2) was measured by the following method.
Each sample was demetallized with hydrochloric acid in a xylene/butanol mixed solvent and titrated with thymol blue indicator to measure the amount (molar amount) of generated carboxyl group (COOH). Since this amount (molar amount) of generated carboxyl group (COOH) is equal to the molar amount of COOM⁺, the molar amount of COOM⁺ per 1 kg of sample (metal ion concentration) was calculated from the thus obtained molar amount of generated carboxyl groups (COOH).

**[Table 1]**

| Saponified polymer | Copolymer | Saponification degree [%] | Ester group | Metal group | Metal ion concentration [mol/kg] |
|---|---|---|---|---|---|
| A1 | EEA-1 | 60 | EA | K | 2.04 |
| A2 | EEA-2 | 60 | EA | K | 1.56 |

### -Production of base polymers 1 to 8-

The saponified polymer (A) was blended with the respective dimer acids (B1) to (B3) as shown in Table 2 below (in Table 2, the unit of "amount" is [% by mass]) and each resultant was melt-kneaded using a kneader (biaxial extruder manufactured by Ikegai Corporation) at a temperature of 230°C and a rotation speed of 100 min⁻¹ to a obtain composition.

**[Table 2]**

| Base polymer | Saponified polymer (A) | | Dimer acid (B) | |
|---|---|---|---|---|
| | Type | Amount | Type | Amount |
| 1 | A1 | 90 | B1 | 10 |
| 2 | A1 | 90 | B2 | 10 |
| 3 | A1 | 85 | B2 | 15 |
| 4 | A1 | 80 | B2 | 20 |
| 5 | A1 | 70 | B2 | 30 |
| 6 | A1 | 100 | none | none |
| 7 | A1 | 95 | B1 | 5 |
| 8 | A1 | 90 | B3 | 10 |

### 2. Evaluation items and evaluation methods

-Evaluation of antistatic performance [surface resistivity (specific surface resistivity)] and fluidity

Next, using TOSHIBA IS-100E (clamp force: 100 tons), the thus obtained compositions were each injection-molded at a molding temperature of 230°C and a die temperature of 40 to 45°C to obtain a sheet of 80 mm × 150 mm × 2 mm. The thus obtained sheet samples were subjected to the following evaluations.
It is noted here that, in Table 3, the "A/B component amount" indicates the mass ratio [% by mass] of each component, taking the total mass of the saponified polymer (A) and the dimer acid (B) as 100.

### (i) Antistatic performance [surface resistivity (specific surface resistivity)]

After aging the 2 mm-thick injection-molded sheet for 24 hours at a constant temperature and humidity (23°C, 50% RH), the surface resistivity of the sample [Ω/square] was measured using an electric resistivity meter HIRESTA manufactured by Mitsubishi Chemical Corporation at an applied voltage of 500 V and a voltage application time of 10 seconds. The measurement limit of this electric resistivity meter was 1.0 × 10⁷ Ω/square (it is noted here that, in the following tables, the description of ten to the power of, for example, 7 (x 10⁷) is indicated as E7). The evaluation results are shown in Table 3.

### (ii) Evaluation of fluidity

After mixing the respective samples, the melt flow rate (MFR) was measured and the measured value was used as a fluidity index. Here, the MRF measurement was performed at a temperature of 230°C and a load of 10 kg in accordance with the method of JIS K7210-1999. The evaluation results are shown in Table 3.

**[Table 3]**

| | Base polymer | | | MFR (230°C, 10kg) [g/10 min] | Surface resistivity (23°C) [Ω/square] | |
|---|---|---|---|---|---|---|
| | Type | A/B component amount | | | | |
| | | A | B | | 30%RH | 50%RH |
| Example 1 | 1 | 90 | 10 | 4.2 | Measurement limit or less | Measurement limit or less |
| Example 2 | 2 | 90 | 10 | 4.1 | Measurement limit or less | Measurement limit or less |
| Example 3 | 3 | 85 | 15 | 7.5 | Measurement limit or less | Measurement limit or less |
| Example 4 | 4 | 80 | 20 | 12.8 | Measurement limit or less | Measurement limit or less |
| Example 5 | 5 | 70 | 30 | 25.7 | not measured | not measured |
| Reference Example 1 | 6 | 100 | 0 | 0.22 | Measurement limit or less | Measurement limit or less |

It is seen from Table 3 that, when the dimer acid (B) was added to the saponified polymer (A), the fluidity was improved without impairing the antistatic performance of the saponified polymer (A). This fluidity-improving effect was proportional to the added amount of the dimer acid.

Then, a styrene-based resin (E) was added to the thus prepared base polymers 1 to 6 in the amounts shown in Table 4 below and the resultant was mixed for 10 minutes using a LABO PLASTOMILL kneader (twin-screw, manufactured by Toyo Seiki Seisaku-sho, Ltd.) at a temperature of 180°C and a rotation speed of 50 min⁻¹ to obtain thermoplastic styrene-based resin compositions. The thus obtained compositions were subjected to the evaluation of antistatic performance in the same manner as in Example 1. Further, bleed-out was also evaluated under the conditions described below.
It is noted here that, in Table 4, the "Added amount" in the column of "Resin composition" indicates the mass of the base polymer or that of the styrene-based resin with respect to the total mass of the resin composition and the unit thereof is % by mass.

### -Evaluation of bleed out-

An injection square plate (hereinafter, referred to as "square plate") was produced and immediately thereafter, the surface of the square plate and that of the molding die were observed with naked eyes to evaluate the presence or absence of bleed-out in accordance with the following evaluation criteria. The evaluation results are shown in Table 4.

### -Evaluation criteria-

A: There was observed no occurrence of bleed-out and no contamination on the square plate surface and the die.
B: There was observed no bleed-out on the surface of the square plate; however, the die was slightly contaminated.
C: Bleed-out was observed over the entire surface of the square plate and the die was contaminated as well.

**[Table 4]**

| | Resin composition | | | | Evaluation of bleed-out | Surface resistivity (23°C) [Ω/square] | |
|---|---|---|---|---|---|---|---|
| | Base polymer | | Styrene-based resin | | | | |
| | Type | Added amount | Type | Added amount | | 30%RH | 50%RH |
| Example 6 | 1 | 2 | E1 | 98 | A | not less than 1×E15 | 2.99×E13 |
| Example 7 | 1 | 3 | E1 | 97 | A | 1.80×E13 | 1.77×E12 |
| Example 8 | 1 | 5 | E1 | 95 | A | 1.65×E12 | 1.14×E10 |
| Example 9 | 1 | 10 | E1 | 90 | A | 1.14×E10 | 1.86×E8 |
| Example 10 | 2 | 2 | E1 | 98 | A | not less than 1×E15 | 2.86×E13 |
| Example 11 | 2 | 3 | E1 | 97 | A | 1.57×E13 | 2.14×E12 |
| Example 12 | 2 | 5 | E1 | 95 | A | 1.48×E12 | 1.89×E10 |
| Example 13 | 2 | 10 | E1 | 90 | A | 1.29×E10 | 2.48×E8 |
| Example 14 | 3 | 2 | E1 | 98 | A | not less than 1×E15 | 7.92×E13 |
| Example 15 | 3 | 3 | E1 | 97 | A | 2.9×E13 | 1.20×E12 |
| Example 16 | 3 | 5 | E1 | 95 | A | 1.51×E12 | 8.57×E9 |
| Example 17 | 3 | 10 | E1 | 90 | A | 3.20×E10 | 2.07xE8 |
| Example 18 | 4 | 5 | E1 | 95 | B | 6.5×E13 | 6.50×E12 |
| Example 19 | 5 | 5 | E1 | 95 | B | 9.0×E13 | 8.0×E12 |
| Reference Example 2 | 6 | 2 | E1 | 98 | A | not less than 1×E15 | not less than 1×E15 |
| Reference Example 3 | 6 | 3 | E1 | 97 | A | not less than 1×E15 | not less than 1×E15 |
| Reference Example 4 | 6 | 5 | E1 | 95 | A | not less than 1×E15 | not less than 1×E15 |
| Reference Example 5 | 6 | 10 | E1 | 90 | A | 1.44×E14 | 2.14×E13 |

As shown in Table 4, when a composition (base polymer) of saponified polymer (A) and dimer acid (B) was added to the styrene-based resin, good surface resistivity was reduced and good antistatic properties were exhibited. Here, although the antistatic performance was maintained, there was observed a risk of inducing bleed-out as the blending ratio of the dimer acid was increased.

### -Evaluation of impact resistance-

A saponified polymer-containing composition (base polymer) constituted by a saponified polymer (A) and a dimer acid (B) was blended with a styrene-based resin to obtain a thermoplastic styrene-based resin composition. The blending ratios of the base polymer and the styrene-based resin were as shown in Table 5. It is noted here that, in Table 5, the "Added amount" in the column of "Resin composition" indicates the mass of the base polymer or that of the styrene-based resin with respect to the total mass of the resin composition and the unit thereof is % by mass.

Then, in order to determine the dispersibility of the resin composition according to the present invention in the styrene-based resin, the impact resistance was investigated. Specifically, the notched Izod impact strength was measured by the following method. The results thereof are shown in Table 5.
Using TOSHIBA IS-100E (clamp force: 100 tons), the resin composition was injection-molded at a cylinder temperature of 230°C, a die temperature of 40 to 45°C and a back pressure of 0 kg/cm² to prepare two types of test pieces described below and the impact resistance strength thereof was measured by an Izod impact tester.
■ JIS K7110 test piece
   thickness: 1/8 inch and 1/4 inch (notch: 1/10 inch)
■ Test temperature: 23°C and 0°C

**[Table 5]**

| | Resin composition | | | | Impact resistance [unit: KJ/m²] | | | |
|---|---|---|---|---|---|---|---|---|
| | Base polymer | | Styrene-based resin | | 1/8 inch | | 1/4 inch | |
| | Type | Added amount | Type | Added amount | 23°C | 0°C | 23°C | 0°C |
| Example 20 | 1 | 2 | E1 | 98 | 15.7 | 8.4 | 14 | 8.1 |
| Example 21 | 1 | 3 | E1 | 97 | 14.4 | 7.7 | 13.2 | 7.5 |
| Example 22 | 1 | 5 | E1 | 95 | 11 | 6.5 | 10.9 | 6.9 |
| Example 23 | 1 | 10 | E1 | 90 | 6.5 | 4.9 | 6.4 | 4.4 |
| Example 24 | 2 | 2 | E1 | 98 | 14 | 8.4 | 13 | 7.5 |
| Example 25 | 2 | 3 | E1 | 97 | 13.4 | 7.3 | 12.1 | 7.1 |
| Example 26 | 2 | 5 | E1 | 95 | 9.3 | 6 | 9.8 | 6 |
| Example 27 | 2 | 10 | E1 | 90 | 6.4 | 4.5 | 6.2 | 4.3 |
| Example 28 | 3 | 2 | E1 | 98 | 15 | 8.5 | 14.2 | 8.3 |
| Example 29 | 3 | 3 | E1 | 97 | 14.6 | 7.5 | 13.9 | 7.3 |
| Example 30 | 3 | 5 | E1 | 95 | 10.6 | 6.2 | 11.1 | 6.7 |
| Example 31 | 3 | 10 | E1 | 90 | 6.7 | 4.6 | 6.5 | 4.6 |
| Reference Example 6 | none | none | E1 | 100 | 15.7 | 11.1 | 17.7 | 11.4 |

It is seen from Table 5 that the reduction in the impact resistance was small when a composition (base polymer) of saponified polymer (A) and dimer acid (B) was added to the styrene-based resin. From this, it is understood that the dispersibility to the styrene-based resin was improved by the use of dimer acid.

A base polymer and a styrene-based resin were blended and the resulting resin composition was subjected to the evaluation of surface resistance, bleed-out and fluidity in the same manner as in Example 6. It is noted here, however, that the base polymer was adjusted to have a water content of 1,300 ppm by drying it in a 200°C oven prior to the addition of the styrene-based resin. The results are shown in Table 6.
Here, in Table 6, the "Added amount" in the column of "Resin composition" indicates the mass of the base polymer or that of the styrene-based resin with respect to the total mass of the resin composition and the unit thereof is % by mass.

**[Table 6]**

| | Resin composition | | | | Evaluation of bleed-out | MFR | Surface resistivity (23°C) [Ω/square] | |
|---|---|---|---|---|---|---|---|---|
| | Base polymer | | Styrene-based resin | | | | | |
| | Type | Added amount | Type | Added amount | | | 30%RH | 50%RH |
| Example 32 | 2 | 5 | E1 | 95 | A | 41 | 3.00×E12 | 1.20×E11 |
| Example 33 | 2 | 5 | E2 | 95 | A | - | 8.40×E11 | 7.40×E9 |
| Example 34 | 2 | 5 | E3 | 95 | A | 8.9 | 6.60×E13 | 1.58×E12 |

As seen from Table 6, these compositions (base polymers) of saponified polymer (A) and dimer acid (B) were also able to impart good antistatic performance to different types of styrene-based resins.

Evaluations were performed also for those cases where a polyhydric alcohol-alkylene oxide (C) or a polyhydric alcohol (D) was added to a saponified polymer (A) in combination with a dimer acid (B). The results thereof are shown in Table 7.

**[Table 7]**

| | Base polymer | | | Additive | | MFR 230°C 10kg | Surface resistivity (23 °C) [×10⁸ Ω/square] | |
|---|---|---|---|---|---|---|---|---|
| | Type | A/B Component amount | | Type | Amount | | | |
| | | A | B | | | | 20%RH | 12%RH |
| Example 35 | 7 | 95 | 5 | Diglycerol (D1) | 1 | 0.57 | 1.65 | 24.7 |
| Example 36 | 7 | 95 | 5 | Diglycerol (D1) | 3 | 2.27 | 1.54 | 21.4 |
| Example 37 | 7 | 95 | 5 | Diglycerol (D1) | 5 | 7.32 | 1.77 | 18.0 |
| Example 38 | 7 | 95 | 5 | PPG (C1) | 1 | 0.50 | 2.08 | 94.5 |
| Example 39 | 7 | 95 | 5 | PPG (C1) | 3 | 0.75 | 2.18 | 106 |
| Example 40 | 7 | 95 | 5 | PPG (C1) | 5 | 1.13 | 2.88 | 117 |
| Example 41 | 1 | 90 | 10 | Diglycerol (D1) | 1 | 2.05 | 4.73 | 197 |
| Example 42 | 1 | 90 | 10 | Diglycerol (D1) | 3 | 5.26 | 3.62 | 66.4 |
| Example 43 | 1 | 90 | 10 | Diglycerol (D1) | 5 | 15.10 | 3.33 | 58.6 |
| Example 44 | 1 | 90 | 10 | PPG (C1) | 1 | 1.27 | 9.61 | 384 |
| Example 45 | 1 | 90 | 10 | PPG (C1) | 3 | 1.86 | 15.5 | 676 |
| Example 46 | 1 | 90 | 10 | PPG (C1) | 5 | 2.72 | 20.5 | 56.9 |

In Table 7, the column "A" under "A/B component amount" indicates the mass ratio [% by mass] of the saponified polymer with respect to the total mass of each base polymer (total mass of the saponified polymer and dimer acid) and the column "B" indicates the mass ratio [% by mass] of the dimer acid with respect to the total mass of each base polymer (total mass of the saponified polymer and dimer acid).
Further, the "Amount" in the column of "'Additive" indicates the mass of the additive with respect to the total mass of the resin composition and the unit thereof is % by mass.

As seen from Table 7, when the alkylene oxide adduct of a polyhydric alcohol (C) or the polyhydric alcohol (D) was used in combination of a dimer acid, the resulting resin composition exhibited excellent antistatic performance under a low humidity condition. In addition, an improvement in the fluidity was also observed.

-Long-term evaluation of bleed out in thermoplastic styrene-based resin composition-Thermoplastic styrene-based resin compositions were obtained in the same manner as in the preparation of the thermoplastic styrene-based resin composition of Example 6, except that the respective types of base polymer shown in Table 8 and the styrene-based resin (E1) were blended such that the amount of the styrene-based resin was as shown in Table 8.
It is noted here that, in Table 8, the column "A" under "A/B component amount" indicates the mass ratio [% by mass] of the saponified polymer with respect to the total mass of each base polymer (total mass of the saponified polymer and dimer acid) and the column "B" indicates the mass ratio [% by mass] of the dimer acid with respect to the total mass of each base polymer (total mass of the saponified polymer and dimer acid).
Further, the "Content of styrene-based resin (E1)" indicates the mass of the base polymer or that of the styrene-based resin with respect to the total mass of the resin composition and the unit thereof is % by mass.

### (Evaluation method)

An injection square plate (hereinafter, referred to as "square plate") was incubated at a temperature of 40°C for 1 month in a Geer oven and on Day 1, Day 2, Day 5, Day 7, Day 14, Day 21 and Day 29 of the incubation, a powder paper was pressed against the surface of the square plate and observed with naked eyes to evaluate the presence or absence of occurrence of bleed-out in accordance with the following evaluation criteria. The evaluation results are shown in Table 8.
A: There was observed no occurrence of bleed-out and no contamination on the square plate surface and the powder paper.
B: Bleed-out was observed with some contamination on the square plate surface; however, there was observed hardly any contamination on the powder paper.
C: Contamination was observed on the square plate surface and the powder paper due to occurrence of bleed-out.

**[Table 8]**

| | Base polymer | | | Content of styrene-based resin (E1) | Evaluation of bleed-out | | | | | | | |
|---|---|---|---|---|---|---|---|---|---|---|---|---|
| | Type | A/B Component amount | | | | | | | | | | |
| | | A | B | | Day 0 | Day 1 | Day 2 | Day 5 | Day 7 | Day 14 | Day 21 | Day 29 |
| Example 47 | 8 | 90 | 10 | 90 | A | A | A | A | A | A | A | A |
| Example 48 | 2 | 90 | 10 | 90 | A | A | A | A | A | A | A | A |
| Example 49 | 1 | 90 | 10 | 90 | A | A | A | A | A | A | A | A |
| Example 50 | 3 | 85 | 15 | 95 | A | A | A | A | A | A | A | A |
| Example 51 | 3 | 85 | 15 | 90 | A | A | A | A | A | A | A | A |

According to Table 8, it is seen that, even when the resin compositions of a saponified polymer and a dimer acid were added to the styrene-based resin, bleed-out did not occur over a prolonged period of time.

The disclosure of Japanese Patent Application No. 2010-105337 is hereby incorporated by reference in its entirety.
All the documents, patent applications and technical standards described in the present specification are hereby incorporated by reference to the same extent as in cases where each document, patent application or technical standard is concretely and individually described to be incorporated by reference.

## Claims

1. A saponified polymer-containing composition comprising a saponified polymer (A), which is obtained by alkaline saponification of a random copolymer of ethylene and an unsaturated carboxylic acid ester, and a dimer acid (B).

2. The saponified polymer-containing composition according to claim 1, wherein the content of said dimer acid (B) is 1% by mass to 30% by mass based on a total mass of said saponified polymer (A) and said dimer acid (B).

3. The saponified polymer-containing composition according to claim 1, wherein said alkaline saponification is potassium saponification.

4. The saponified polymer-containing composition according to claim 1, wherein said unsaturated carboxylic acid ester is a C₁ to C₈ alkyl ester of an unsaturated carboxylic acid.

5. The saponified polymer-containing composition according to claim 4, wherein said unsaturated carboxylic acid is at least either of acrylic acid and methacrylic acid.

6. The saponified polymer-containing composition according to claim 1, which further comprises a polyhydric alcohol or an alkylene oxide adduct of a polyhydric alcohol.

7. A polymer-type antistatic agent comprising the saponified polymer-containing composition according to claim 1.

8. A thermoplastic styrene-based resin composition, which comprises the saponified polymer-containing composition according to claim 1 in an amount ranging from not less than 2% by mass to less than 100% by mass and a styrene-based resin in an amount ranging from more than 0% by mass to less than 98% by mass (wherein the total amount of said saponified polymer-containing composition and said styrene-based resin is defined as 100% by mass).

9. A formed body comprising the thermoplastic styrene-based resin composition according to claim 8.

10. A method of producing a formed body, in which the thermoplastic styrene-based resin composition according to claim 8 is melt-formed.
